# EUROPEAN PATENT APPLICATION

(11) **EP 4 808 222 A1**
(43) Date of publication of application: **16.09.2026**
(21) Application number: 24915964.1
(22) Date of filing: 10.01.2024
(51) Int. Cl.: H04W 52/02

(54) **MEASUREMENT METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Grassi, Stefano
(86) International application number: PCT/CN2024/071530
(87) International publication number: WO 2025/147884

(57) **Abstract**

The present application relates to the field of communications. Disclosed are a measurement method and apparatus, and a device and a storage medium. The method is executed by a terminal device. The method comprises: determining an RRM measurement behavior on the basis of a first signal strength and/or a second signal strength, wherein the first signal strength is the signal strength of a first signal, and the second signal strength is the strength of a second signal, the first signal comprising a measurement signal corresponding to a first receiver, and the second signal comprising a measurement signal corresponding to a second receiver. The present application provides a feasible RRM measurement solution for a terminal device having a first receiver and a second receiver, in which solution an RRM measurement behavior is determined on the basis of the signal strength of measurement signals corresponding to different receivers.

## Description

### TECHNICAL FIELD

The present application relates to the field of communications, and in particular to a measurement method and apparatus, a device and a storage medium.

### BACKGROUND

In order to achieve energy saving on terminal device side, it may be considered to configure two receivers for a terminal device, so that the terminal device can operate with a lower-power receiver when there is no service or paging message.

Performing radio resource management (RRM) measurements by the terminal device is a necessary action to ensure efficiency and communication quality within the communication system. However, there is no feasible solution on how a terminal device having two receivers should perform RRM measurement.

### SUMMARY

Embodiments of the present application provide a measurement method and apparatus, a device and a storage medium, and the solution at least includes the following.

According to an aspect of the embodiments of the present application, there is provided a measurement method, performed by a terminal device, where the terminal has a first receiver and a second receiver, and the first receiver has lower operating energy consumption than the second receiver. The method includes the following action.

The terminal device determines an RRM measurement behavior based on a first signal strength and/or a second signal strength, where the first signal strength is strength of a first signal, the second signal strength is strength of a second signal, the first signal includes a measurement signal corresponding to the first receiver, and the second signal includes a measurement signal corresponding to the second receiver.

According to another aspect of the embodiments of the present application, there is provided a measurement method, performed by a network device. The method includes the following action.

The network device sends a first signal and/or a second signal, where a first signal strength and/or a second signal strength are used to determine an RRM measurement behavior, the first signal strength is strength of a first signal, the second signal strength is strength of a second signal, the first signal includes a measurement signal corresponding to a first receiver, and the second signal includes a measurement signal corresponding to a second receiver.

According to an aspect of the embodiments of the present application, there is provided a measurement apparatus, including:
a first receiving module and a second receiving module, where the first receiving module has lower operating energy consumption than the second receiving module; and
a processing module, configured to determine an RRM measurement behavior according to a first signal strength and/or a second signal strength.

Herein, the first signal strength is strength of a first signal, the second signal strength is strength of a second signal, the first signal includes a measurement signal corresponding to the first receiving module, and the second signal includes a measurement signal corresponding to the second receiving module.

According to another aspect of the embodiments of the present application, there is provided a measurement apparatus, including: a sending module.

The sending module is configured to send a first signal and/or a second signal, where a first signal strength and/or a second signal strength are used to determine a radio resource management (RRM) measurement behavior, the first signal strength is signal strength of the first signal, the second signal strength is strength of the second signal, the first signal includes a measurement signal corresponding to a first receiver, and the second signal includes a measurement signal corresponding to a second receiver.

According to an aspect of the embodiments of the present application, there is provided a terminal device, including: a processor; and a receiver connected to the processor. The terminal device is used to implement the measurement method as described above.

According to another aspect of the embodiments of the present application, there is provided a network device, including: a processor; a transmitter connected to the processor; and a memory for storing instructions executable by the processor. The network device is used to implement the measurement method as described above.

According to one aspect of the present application, there is provided a computer-readable storage medium, having stored therein computer executable instructions, which are loaded and executed by a processor to implement the measurement method as described above.

According to one aspect of the present application, there is provided a computer program product, including computer instructions stored in a computer-readable storage medium, where a processor of a computer device reads and executes the computer instructions from the computer-readable storage medium, such that the computer device implements the measurement method as described above.

According to an aspect of the present application, there is provided a chip, including programmable logic circuitry and/or program instructions, where the chip, when running, implements the measurement method as described above.

According to one aspect of the present application, there is provided a computer program including computer instructions, where a processor of a computer device reads and executes the computer instructions to cause the computer device to implement the measurement method as described above.

The technical solution provided by the embodiments of the present application may include the following beneficial effect.

A feasible RRM measurement solution is provided for a UE having a first receiver and a second receiver, supporting the UE to determine RRM measurement behavior based on signal strengths of measurement signals corresponding to different receivers.

### BRIEF DESCRIPTION OF THE DRAWINGS

In order to more clearly explain the technical solution in the embodiments of the present application, the following will briefly introduce the accompanying drawings that need to be used in the description of the embodiments. Apparently, the accompanying drawings in the following description are only some embodiments of the present application, and those with ordinary skill in the art can obtain other drawings from these drawings without exerting creative efforts.
FIG. 1 illustrates a schematic diagram of a receiver system provided by an exemplary embodiment of the present application.
FIG. 2 illustrates a schematic diagram of a wireless communication system provided by an exemplary embodiment of the present application.
FIG. 3 illustrates a schematic flowchart of a measurement method provided by an exemplary embodiment of the present application.
FIG. 4 illustrates a schematic flowchart of a measurement method provided by an exemplary embodiment of the present application.
FIG. 5 illustrates a schematic flowchart of a measurement method provided by an exemplary embodiment of the present application.
FIG. 6 illustrates a schematic flowchart of a measurement method provided by an exemplary embodiment of the present application.
FIG. 7 illustrates a schematic flowchart of a measurement method provided by an exemplary embodiment of the present application.
FIG. 8 illustrates a structural block diagram of an apparatus of a measurement apparatus provided by an exemplary embodiment of the present application.
FIG. 9 illustrates a structural block diagram of an apparatus of a measurement apparatus provided by an exemplary embodiment of the present application.
FIG. 10 is a schematic structural diagram of a network device provided by an exemplary embodiment of the present application.
FIG. 11 illustrates a schematic structural diagram of a terminal device provided by an exemplary embodiment of the present application.

### DETAILED DESCRIPTION

In order to make the objectives, technical solutions, and advantages of the present application more clear, embodiments of the present application will be described in further detail below with reference to the accompanying drawings. Exemplary embodiments will be described in detail herein, with examples illustrated in the accompanying drawings. The following description, when involving the accompanying drawings, shall be construed such that unless otherwise indicated, the same numerals in different drawings denote the same or similar elements. The implementations described in the following exemplary embodiments do not represent all implementations consistent with the embodiments of the present application. Rather, they are merely examples of devices and methods consistent with some aspects of the embodiments of the present application as detailed in the appended claims.

The terms used in the present application are intended solely for the purpose of describing particular embodiments, and are not intended to limit the present application. The singular forms "a/an", "said" and "the" as used in the present application and the appended claims are also intended to include the plural forms, unless being indicated in the context otherwise. It should also be understood that the term "and/or" herein refers to and includes any or all possible combinations of one or more associated listed items.

It is to be understood that although the terms first, second, third, and the like may be used in the present application to describe various information, such information should not be limited to these terms. These terms are used only to distinguish information of the same type from each other. For example, without departing from the scope of the present application, the first information may also be referred to as the second information, and similarly the second information may also be referred to as the first information. Depending on the context, the word "if" as used herein may be interpreted as "at the time of" or "when" or "responsive to determining".

Communication technologies involved in the embodiments of the present application will be described in detail first.

### Radio Resource Control (RRC) states:

RRC IDLE state (RRC_IDLE): Mobility in RRC IDLE refers to cell selection or cell reselection based on a terminal Equipment (UE). Paging is initiated by a Core Network (CN), and the paging area is configured by the CN. There is no Access Stratum (AS) context for the UE on the access network device side, and no RRC connection exists between the UE and access network device.

RRC CONNECTED state (RRC_CONNECTED): Mobility in RRC CONNECTED is network-controlled mobility. There is RRC connection between the UE and the access network device, and AS context exists on both the UE side and the access network device side. Unicast data may be transmitted between the UE and the access network device. The UE's location known to the network side is at the cell level.

RRC INACTIVE state (RRC_INACTIVE): Mobility in RRC INACTIVE refers to cell selection or cell reselection based on the UE. Connection exists between the core network and the access network device, and connection between the access network device and the UE is suspended. AS context for the UE exists on a certain access network device. Paging is triggered by a Radio Access Network (RAN), RAN-based paging area is managed by the RAN, and the UE's location known to the Network side is based on the RAN-based paging area level.

### Measurement in RRC_IDLE and RRC_INACTIVE states:

In RRC_IDLE and RRC_INACTIVE, the UE continuously performs measurements of a serving cell, and the UE's behavior for neighbor cell measurements are governed by parameters in system broadcast information. For example:

For initiation of intra-frequency measurements, if the serving cell Srxlev > S_{IntraSearchP} and the serving cell Squal > S_{IntraSearchQ}, intra-frequency measurements are not initiated. Otherwise, if the serving cell Srxlev < S_{IntraSearchP}, and/or the serving cell Squal < S_{IntraSearchQ}, intra-frequency measurements are initiated.

For inter-frequency measurements of the same priority or lower priority, if the serving cell Srxlev > S_{nonIntraSearchP} and the serving cell Squal > S_{nonIntraSearchQ}, inter-frequency measurements of the same priority or lower priority are not initiated. Otherwise, if the serving cell Srxlev < S_{nonIntraSearchP} and/or the serving cell Squal < S_{nonIntraSearchQ}, inter-frequency measurements of the same priority or lower priority are initiated. Herein, inter-frequency measurements of the same priority correspond to reselection to inter-frequency cells of the same priority; and inter-frequency measurements of lower-priority correspond to reselection to an inter-frequency cell of a lower priority.

For inter-frequency measurements of high priority (i.e., reselection to an inter-frequency cell of a higher priority), inter-frequency measurements of high priority are always initiated.

The above Srxlev is calculated based on Reference Signal Receiving Power (RSRP): Srxlev= Qrxlevmeas- (qRxLevMin+qRxLevMinOffset)- pCompensation. Here, Qrxlevmeas is RSRP value of the measured cell, qRxLevMin is the lowest receiving level (typically 0-128dbm), qRxLevMinOffset is the lowest receiving level bias (typically 0), and pCompensation is the power compensation (typically 0).

### Neighbor cell measurement relaxation:

In order to achieve energy saving on the UE side, two criteria are defined for Radio Resource Management (RRM) measurements at UE, namely, Not-Cell-Edge criterion and Low-Mobility criterion. When both criteria are configured simultaneously, the network device further indicates to the UE whether the two criteria are in an "AND" or "OR" relationship. The Not-Cell-Edge criterion mainly defines an RSRP threshold. When an RSRP measurement value of a serving cell is greater than this threshold, the UE can perform neighbor cell RRM measurement relaxation. The Low-Mobility criterion means that when the RSRP of the serving cell changes little, the UE has little need for cell reselection, so neighbor cell measurement relaxation may be performed to achieve energy saving. Specifically:

Configuration of parameter s-SearchDeltaP in system information means that the cell supports that the UE performs neighbor cell measurement relaxation. The UE may perform neighbor cell measurement relaxation when the RSRP measurement result of the serving cell satisfies a neighbor cell measurement relaxation condition within the time range TSearchDeltaP.

Neighbor cell measurement relaxation condition: (SrxlevRef - Srxlev) < s-SearchDeltaP, where Srxlev is a current Srxlev measurement value of the serving cell, and SrxlevRef is a reference value Srxlev of the serving cell.

When the UE selects or reselects to a new cell, or if (Srxlev-SrxlevRef) > 0, or if the measurement relaxation condition is not met during TSearchDeltaP, then the UE sets SrxlevRef as the current measurement value Srxlev of the serving cell.

If only one of the Not-Cell-Edge criterion and the Low-Mobility criterion is configured on the network side, that is, only one of parameters lowMobilityEvaluation and cellEdgeEvaluation is configured on the network side, or if both the parameters lowMobilityEvaluation and cellEdgeEvaluation are configured but the parameter combineRelaxedMeasCondition is not configured on the network side, then the UE performs neighbor cell measurement relaxation if the configured criterion is satisfied. At this time, intra-frequency measurement requirements under the case of the neighbor cell measurement relaxation are scaled by K1 times (i.e., 3 times) compared to that of the normal case (i.e., under the case of neighbor cell measurement non-relaxation). Similarly, the inter-frequency measurement requirements under the case of the neighbor cell measurement relaxation are scaled by a K1 times (i.e., 3 times) compared to that under the normal case (i.e., under the case of neighbor cell measurement non-relaxation).

If parameters lowMobilityEvaluation and cellEdgeEvaluation are configured on the network side, and the parameter combineRelaxedMeasCondition is also configured, then when the non-cell edge criterion and the low mobility criterion are satisfied at the same time, a measurement interval of 1 hour is adopted by the UE for the intra-frequency and inter-frequency measurements.

### Wake-Up Receiver (WUR):

In order to further achieve energy saving of UE, a mechanism of WUR receiving an energy-saving signal is introduced. WUR has the characteristics of extremely low cost, extremely low complexity and extremely low power consumption, and it mainly receives the energy-saving signal through envelope detection. The energy-saving signal is mainly an envelope signal, and demodulation of the envelope signal can be accomplished by using a low-power circuit driven by energy provided by radio frequency signals, so it can be passive. The WUR may also be powered by the UE. Regardless of the power supply mode, the WUR greatly reduces the power consumption compared with the traditional receiver of the UE. For example, the WUR can achieve power consumption of less than 1 milliwatt (mW), which is far lower than the power consumption of tens to hundreds of mW for a traditional receiver. The WUR may be combined with the UE as an additional module of a legacy receiver of the UE or as a separate module of the UE, such as a wake-up function module.

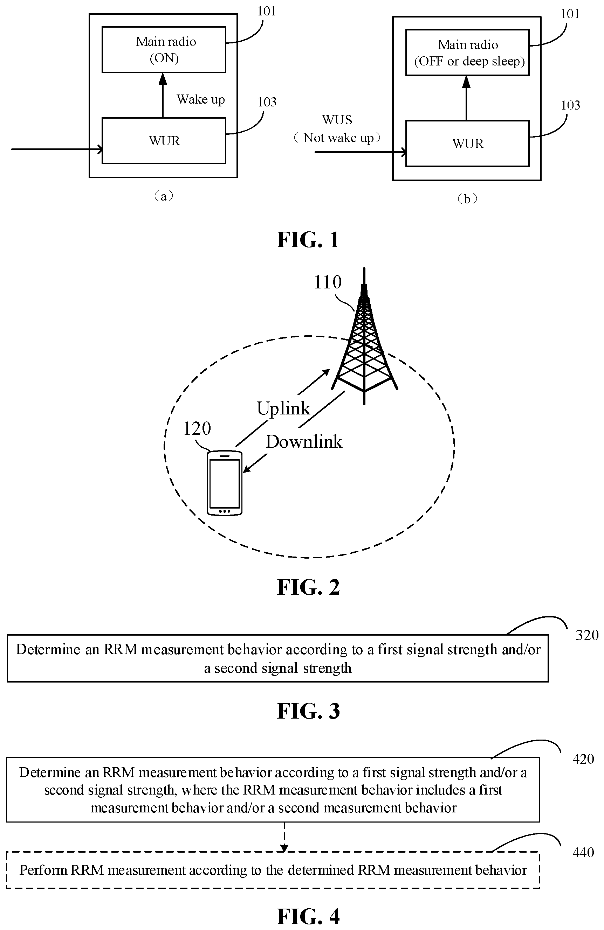

As illustrated in FIG. 1, if the UE needs to turn on main radio (MR) 101, the network side can send a wake-up signal (WUS) to turn on the MR 101 of the UE. Otherwise, the MR 101 of the UE may be in an OFF or Deep Sleep state. Therefore, the UE may use the WUR 103 to monitor the WUS. When there is no traffic or no paging message, the UE can continuously use the WUR 103. Only when there is traffic, the UE receives a WUS and wakes up the MR 101 for data transmission and reception. Therefore, compared with the traditional mode where the UE always uses the main radio, the WUR 103 can enables significant reduction of overall power consumption of the UE, achieving energy saving on the UE side.

In some embodiments, whether to turn on the main radio is implicitly indicated by the WUS. For example, the network side sending a WUS means an instruction to turn on the main radio, while the network side not sending a WUS means an instruction not to turn on the main radio.

In some embodiments, whether to turn on the main radio is explicitly indicated by the WUS. For example, if the WUS sent by the network side carries a wake-up indication, it means an instruction to turn on the main radio, as illustrated in FIG. 1(a). For example, if the WUS sent by the network side carries a non-wake-up indication, it means not to wake up the main radio, and the main radio remains in the OFF or deep sleep state, as illustrated in FIG. 1(b).

After introducing the WUR, it is supported that the UE monitors WUS through the WUR, instead of using the main radio to monitor the Physical Downlink Control Channel (PDCCH), which helps achieve energy saving on the UE side.

However, the RRM measurement mechanism after the introduction of WUR is not yet conclusive. That is, there is still no solution about how a UE that supports operating with WUR should perform RRM measurements.

FIG. 2 illustrates a schematic diagram of a wireless communication system provided by an exemplary embodiment of the present application. The wireless communication system 100 includes a network device 110 and a terminal device 120, which is not limited in the present application.

The Network device 110 in the present application provides wireless communication functions. The Network device 110 includes, but is not limited to, an Evolved Node B (eNB), a Radio Network Controller (RNC), a Node B (NB), a Base Station Controller (BSC), a Base Transceiver Station (BTS), a Home Base Station (e.g., a Home Evolved Node B, or a Home Node B, HNB), a Baseband Unit (BBU), an Access Point (AP), a Wireless relay Node, a Wireless Backhaul Node, a Transmission Point (TP) or a Transmission and Reception Point (TRP) in a Wireless Fidelity (Wi-Fi) system, or the like, or it may be a Next Generation Node B (gNB) or a Transmission Point (TRP or TP) in a Fifth Generation (5G) mobile communication system, or one or a group of antenna panels (including multiple antenna panels) of a base station in a 5G system, or a Network Node constituting a gNB or a Transmission Point, such as a BBU or a Distributed Unit (DU), or the like, or a base station in a Beyond Fifth Generation (B5G) mobile communication system or a sixth Generation (6G) mobile communication system, or a Core Network (CN), Fronthaul, Backhaul, Radio Access Network (RAN), Network slice, or a reader and writer in a Radio Frequency Identification (RFID) system.

The terminal device 120 in the present application may be referred to as a user equipment (UE), an access terminal, a subscriber unit, a subscriber station, a mobile station, a mobile platform, a remote station, a remote terminal, a mobile device, a user terminal, a terminal device, a wireless communication device, a user agent, or a user apparatus. The terminal includes, but is not limited to, a handheld device, a wearable device, an in-vehicle device, an Internet of Things device, and the like, for example, an electronic tag, a controller, a Mobile phone, a tablet, an e-book reader, a laptop computer, a desktop computer, a television, a game console, a Mobile Internet Device (MID), an Augmented Reality (AR) terminal, a Virtual Reality (VR) terminal, and a Mixed Reality (MR) terminal, a wearable Device, a handle, a Wireless terminal in Industrial Control, a wireless terminal in Self Driving, a wireless terminal in Remote Medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE) etc.

The network device 110 and the terminal device 120 communicate with each other through a certain air interface technology, such as via Uu interface.

Exemplarily, there are two communication scenarios between the network device 110 and the terminal device 120: uplink communication and downlink communication. Here, the uplink communication is to send signals to the network device 110, and the downlink communication is to send signals to the terminal device 120.

In some embodiments, there are one or multiple terminal devices 120. The multiple terminal devices 120 communicate with each other via a direct communication interface, such as PC5 interface. Optionally, communication between the multiple terminal devices 120 may be referred to as sidelink communication.

The technical solutions provided by the embodiments of the present application may be applied to various communication systems, such as a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) System, a LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, a LTE-based access to unlicensed spectrum (LTE-U) system on unlicensed spectrum, an NR-based access to unlicensed spectrum (NR-U) system, a Terrestrial Networks (TN) system, a Non-Terrestrial Networks (NTN) system, Wireless Local Area Networks (WLAN), Wireless Fidelity (Wi-Fi), a cellular Internet of Things (IoT) system, a cellular passive IoT system. Or, the communication system may be applied to a future evolution system of the 5G NR system, or B5G, 6G, and future evolution systems. In some embodiments of the present application, "NR" may also be referred to as a 5G NR system or a 5G system. The 5G mobile communication system may include Non-Standalone (NSA) and/or Standalone (SA) architectures.

The technical solution provided by the embodiments of the present application may also be applied to Machine Type Communication (MTC), Long Term Evolution-Machine (LTE-M), device-to-device (D2D) network, machine-to-machine (M2M) network, Internet of Things (IoT) network, or other networks. The IoT network may include, for example, Internet of Vehicles. The communication methods adopted within a vehicle-to-everything (V2X) system are collectively referred to as Vehicle-to-Everything (V2X), where X may represent anything. For example, V2X may include: Vehicle-to-Vehicle (V2V) communication, Vehicle-to-Infrastructure (V2I) communication, Vehicle-to-Pedestrian (V2P) communication, Vehicle-to-Network (V2N) communication, and the like.

The wireless communication system provided in the present embodiment may be applied to, but is not limited to, at least one of the following communication scenarios: uplink communication, downlink communication, and sidelink communication scenarios.

FIG. 3 illustrates a schematic flowchart of a measurement method provided by an exemplary embodiment of the present application. The method is performed by UE and includes action 320.

In action 320, a RRM measurement behavior is determined by the UE based on a first signal strength and/or a second signal strength.

The first signal strength is signal strength of a first signal, and the first signal includes a measurement signal corresponding to a first receiver.

The second signal strength is signal strength of a second signal, and the second signal includes a measurement signal corresponding to a second receiver.

In embodiments of the present application, the UE has a first receiver and a second receiver, and an operating energy consumption of the first receiver is lower than an operating energy consumption of the second receiver.

In some embodiments, the operating energy consumption of the first receiver being lower than the operating energy consumption of the second receiver, may be embodied in at least one of the following aspects that: the structure of the first receiver is simpler than the structure of the second receiver; waveform adopted by the first signal is simpler than the waveform adopted by the second signal; power consumption required for generating the first signal is lower than power consumption required for generating the second signal; power consumption required for receiving the first signal is lower than power consumption required for receiving the second signal; or power consumption required for detecting the first signal is lower than power consumption required for detecting the second signal.

In some embodiments, the first receiver may be referred to as at least one of: a Wake-Up Receiver (WUR), a Low Power Wake-Up Receiver (LP-WUR), an Ultra Low Power Wake-Up Receiver (ULP-WUR), a low power receiver, an ultra low power receiver, a zero power receiver, or a secondary receiver.

In some embodiments, the second receiver may be referred to as at least one of: a legacy receiver, or a main receiver.

In some embodiments, the RRM measurement behavior may also be understood as an RRM measurement operation or RRM measurement mode. Determining the RRM measurement behavior may also be understood as determining by the UE its behavior, operation, and mode of performing the RRM measurement. The UE determining the RRM measurement behavior based on the first signal strength and/or the second signal strength, may also be understood as that the UE determines how it performs the RRM measurement based on the first signal strength and/or the second signal strength, or may also be understood as that the UE determines its adopted RRM measurement mode based on the first signal strength and/or the second signal strength.

In summary, the method provided by the embodiments of the present application provides a feasible RRM measurement scheme for a UE having a first receiver and a second receiver, which supports the UE in determining RRM measurement behavior according to signal strengths of measurement signals corresponding to different receivers.

In some embodiments, the RRM measurement behavior supported by the UE includes a first RRM measurement behavior and/or a second RRM measurement behavior, and the action 320 may be implemented as action 420 as illustrated in FIG. 4. FIG. 4 illustrates a schematic flowchart of a measurement method provided by an exemplary embodiment of the present application. The method is performed by UE and includes action 420. Optionally, the method may further include action 440.

In action 420, an RRM measurement behavior is determined by UE according to a first signal strength and/or a second signal strength, where the RRM measurement behavior includes a first RRM measurement behavior and/or a second RRM measurement behavior.

In the embodiment of the present application, the RRM measurement behavior may also be understood as an RRM measurement operation or an RRM measurement mode. The first RRM measurement behavior may also be referred to as a first RRM measurement operation or a first RRM measurement mode, and the second RRM measurement behavior may also be referred to as a second RRM measurement operation or a second RRM measurement mode.

In some embodiments, the first RRM measurement behavior includes: using the first receiver to perform RRM measurement of a serving cell. The second RRM measurement behavior includes: using the first receiver to perform RRM measurement of the serving cell and/or a neighboring cell(s).

In some embodiments, the signal strength may be represented by at least one of following measurement results: a Reference Signal Receiving Power (RSRP) value, a Reference Signal Strength Indicator (RSSI) value, a Reference Signal Receiving Quality (RSRQ) value, a Signal to Interference plus Noise Ratio (SINR) value, a Cross Link Interference (CLI) value, or a Channel State Information (CSI) value, and the like.

In the embodiment of the present application, the first signal strength and the second signal strength may be instantaneous measurement results or average measurement results. Exemplarily, the first signal strength is an instantaneous RSRP value of the first signal and the second signal strength is an instantaneous RSRP value of the second signal. Exemplarily, the first signal strength is an instantaneous RSSI value of the first signal and the second signal strength is an instantaneous RSSI value of the second signal. Exemplarily, the first signal strength is an average RSRQ value of the first signal, and the second signal strength is an average RSRQ value of the second signal, ,and so on, which are not listed exhaustively here.

In some embodiments, the action 420 may also be implemented as action 420(a).

In action 420(a), if the first signal strength is below a first threshold, it is determined by the UE that the RRM measurement behavior includes the second RRM measurement behavior.

Here, determining that the RRM measurement behavior includes the second RRM measurement behavior may also be understood as: determining to operate using the second RRM measurement behavior.

In some embodiments, when the UE operates using the first RRM measurement behavior and the first signal strength is below the first threshold, the UE switches from the first RRM measurement behavior to the second RRM measurement behavior. That is, it is supported that the UE switches between the first RRM measurement behavior and the second RRM measurement behavior based on the first signal strength, i.e., to realize switching between using the first receiver to perform RRM measurement and using the second receiver to perform RRM measurement. When reception quality of the first receiver is poor, it is difficult to obtain an accurate RRM measurement result through the first receiver. Therefore, an operating mode in which the second receiver performs RRM measurement can be switched to, thereby achieving more accurate and efficient RRM measurement through the second receiver.

In some embodiments, the action 420 may also be implemented as action 420(b).

In action 420(b), if the first signal strength is below the first threshold, it is determined by the UE that the RRM measurement behavior includes the first RRM measurement behavior and the second RRM measurement behavior.

Here, determining the RRM measurement behavior includes the first RRM measurement behavior and the second RRM measurement behavior, may also be understood as determining to operate using the first RRM measurement behavior and the second RRM measurement behavior. That is, when the first signal strength is below the first threshold, the UE uses the first receiver to perform RRM measurement of a serving cell, and also uses the second receiver to perform RRM measurement of the serving cell and/or a neighboring cell(s).

Exemplarily, when the first signal strength is below the first threshold, the UE performs RRM measurement of neighboring cell using the second receiver, and performs RRM measurement of a serving cell using the first receiver.

Exemplarily, when the first signal strength is below the first threshold, the UE performs RRM measurement of a serving cell and a neighboring cell(s) using the second receiver, and performs RRM measurement of the serving cell using the first receiver.

Exemplarily, when the first signal strength is below the first threshold, the UE performs RRM measurement of a serving cell using the second receiver, and performs RRM measurement of the serving cell using the first receiver.

It is to be noted that in the above example, there is a case where both the first receiver and the second receiver are used to perform RRM measurement of the serving cell. In this case, the first receiver and the second receiver may adopt the same measurement configuration or different measurement configurations. For example, the first receiver and the second receiver perform RRM measurements of the serving cell in a time division manner. For example, the second receiver performs more sparse RRM measurement of the serving cell than the first receiver. That is, an measurement interval (or measurement period) employed by the second receiver when performing the RRM measurement of the serving cell is longer than an measurement interval employed by the first receiver when performing the RRM measurement of the serving cell.

In some embodiments, when the UE operates based on the first RRM measurement behavior and the first signal strength is below the first threshold, the UE switches from the first RRM measurement behavior to the first RRM measurement behavior and the second RRM measurement behavior. That is, the UE is supported to realize switching between the first receiver performing RRM measurement and dual receivers performing RRM measurement according to the first signal strength. When reception quality of the first receiver is poor, it is difficult to obtain an accurate RRM measurement result through the first receiver. Therefore, an operating mode in which both the first receiver and the second receiver perform RRM measurement can be switched to, thereby achieving more accurate and efficient RRM measurement through both receivers.

In some embodiments, the action 420 may also be implemented as action 420(c).

In action 420(c), when the first signal strength and/or the second signal strength satisfy a first condition, it is determined that the RRM measurement behavior includes the first RRM measurement behavior.

Here, determining that the RRM measurement behavior includes the first RRM measurement behavior may also be understood as: determining to operate based on the first RRM measurement behavior. That is, when the first condition is satisfied, the UE performs RRM measurement of the serving cell through the first receiver.

In some embodiments, the first signal strength and/or the second signal strength satisfying the first condition includes at least one of the following that:
- the first signal strength is above a second threshold;
- the second signal strength is above a third threshold; or
- the third signal strength is above a fourth threshold, the third signal strength being determined according to the first signal strength and the second signal strength.

That is, the first condition being satisfied may include the following that: the first signal strength is above the second threshold; or the second signal strength is above the third threshold; or the third signal strength is above the fourth threshold; or, the first signal strength is above the second threshold and the second signal strength is above the third threshold; or the first signal strength is above the second threshold and the third signal strength is above the fourth threshold; or, the second signal strength is above the third threshold and the third signal strength is above the fourth threshold; or, the first signal strength is above the second threshold, the second signal strength is above the third threshold, and the third signal strength is above the fourth threshold.

In some embodiments, the third signal strength is a minimum value between the first signal strength and the second signal strength. Or, the third signal strength is a maximum value between the first signal strength and the second signal strength. Or, the third signal strength is an average value of the first signal strength and the second signal strength. Or, the third signal strength is a weighted average value of the first signal strength and the second signal strength. For example, the third signal strength= [m * first signal strength + (1-m) * second signal strength] /2, where m, 1-m are weighted coefficients, and 0≤ m ≤1. Or, the third signal strength is a modified weighted average value of the first signal strength and the second signal strength. For example, a modified value is added to the first signal strength and/or the second signal strength, and then the weighted average value is taken.

In some embodiments, when the UE operates based on the first RRM measurement behavior and the second measurement behavior, and the first signal strength and/or the second signal strength satisfy the first condition, the UE switches from the first RRM measurement behavior and the second RRM measurement behavior to the first RRM measurement behavior, i.e., the UE switches to operate based on the first RRM measurement behavior. That is, the UE is supported to realize switching between dual receivers performing RRM measurement and the first receiver performing RRM measurement according to the first condition. When the first condition is satisfied, it means that communication quality in the current system is good, and accurate RRM measurement results can be obtained through the first receiver, and thus an operation mode in which the first receiver performs RRM measurement can be switched to, thereby reducing power consumption on the UE side.

In some embodiments, the first threshold may be specified by a communication protocol, or configured by the network side, or determined autonomously by the UE, or determined based on negotiation between the network side and the UE. Exemplarily, the first threshold is configured by a network device via high-layer signaling, where the high-layer signaling includes, for example, system information or RRC signaling or a Media Access Control (MAC) Control Element (CE). The second threshold, the third threshold, and the fourth threshold are similar to the first threshold, and will not be repeated here again.

In some embodiments, the first threshold has the same value as the second threshold, the third threshold, and the fourth threshold, or the first threshold has a different value from the second threshold, the third threshold, and the fourth threshold.

For other content, reference may be made to the action 320, which will not be repeated here.

IT is to be noted that actions 420 (a), 420 (b), and 420 (c) may be implemented separately or may be freely combined. For example, actions 420 (a) and 420 (b) are performed; or actions 420(a) and 420(c) are performed; or operations 420(b) and 420(c) are performed; or actions 420(a), 420(b) and 420(c) are performed.

In action 440, the RRM measurement is performed by the UE according to the determined RRM measurement behavior.

In some embodiments, the UE determines that the RRM measurement behavior includes a first RRM measurement behavior, and then performs the first RRM measurement behavior. Exemplarily, when the first signal strength and/or the second signal strength satisfy the first condition, the UE uses the first receiver to perform RRM measurement of a serving cell.

In some embodiments, the UE determines that the RRM measurement behavior includes a second RRM measurement behavior, and then performs the second RRM measurement behavior. Exemplarily, when the first signal strength is below the first threshold, the UE uses the second receiver to perform RRM measurement of the serving cell and/or a neighboring cell(s). Exemplarily, when the first signal strength is below the first threshold, the UE uses the second receiver to perform neighbor cell RRM measurement, and uses the first receiver to perform serving cell RRM measurement.

In some embodiments, the UE reports an RRM measurement report.

In summary, the method provided by the embodiments of the present application provides a feasible RRM measurement scheme for a UE having a first receiver and a second receiver, supporting the UE in determining RRM measurement behavior(s) according to the first signal strength and the second signal strength, thereby facilitating the UE in using an appropriate receiver to perform appropriate RRM measurement behavior. It also supports the UE to realize switching between different measurement behaviors according to the first signal strength and the second signal strength, so that the UE can timely adjust its RRM measurement behavior according to the current communication quality. Therefore, while ensuring the energy-saving effect, it also facilitates improving the accuracy and efficiency of RRM measurement.

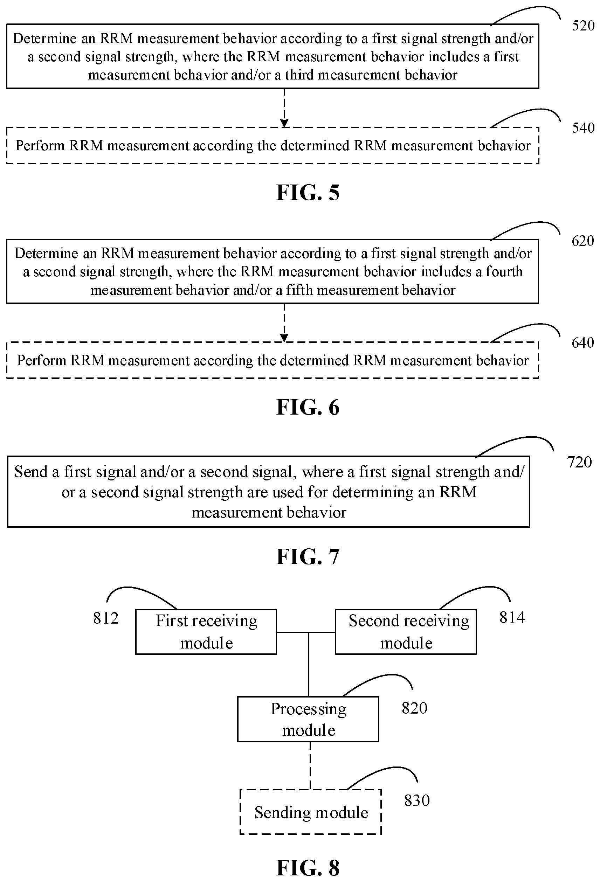

In some embodiments, the RRM measurement behavior supported by the UE includes the first RRM measurement behavior and/or a third RRM measurement behavior, and action 320 may be implemented as action 520 as illustrated in FIG. 5. FIG. 5 illustrates a schematic flowchart of a measurement method provided by an exemplary embodiment of the present application. The method is performed by UE and includes action 520. Optionally, the method may further include action 540.

In action 520, an RRM measurement behavior is determined by the UE according to a first signal strength and/or a second signal strength, where the RRM measurement behavior includes a first RRM measurement behavior and/or a third RRM measurement behavior.

In the embodiment of the present application, the RRM measurement behavior may also be understood as an RRM measurement operation. The first RRM measurement behavior may also be referred to as a first RRM measurement operation, and the third RRM measurement behavior may also be referred to as a third RRM measurement operation.

In some embodiments, the first RRM measurement behavior includes: using a first receiver to perform RRM measurement of a serving cell. The third RRM measurement behavior includes: using the first receiver to perform RRM relaxation measurement of the serving cell. It may be understood that the first RRM measurement behavior is a normal measurement behavior compared to the third RRM measurement behavior. When the UE operates based on the first RRM measurement behavior, the first receiver is used to perform normal measurement of the serving cell, and when the UE operates based on the third RRM measurement behavior, the first receiver is used to perform relaxation measurement of the serving cell.

In some embodiments, a measurement time interval corresponding to the third RRM measurement behavior is greater than a measurement time interval corresponding to the first RRM measurement behavior; and/or a number of measurement signals corresponding to the third RRM measurement behavior is smaller than a number of measurement signals corresponding to the first RRM measurement behavior; and/or a measurement period corresponding to the third RRM measurement behavior is greater than a measurement period corresponding to the first RRM measurement behavior. That is, the relaxation measurement of the serving cell may be embodied in at least one of the following: a larger measurement time interval, a larger measurement period, or a smaller number of measurement signals, compared to the normal measurement of the serving cell. Thus, the third RRM measurement behavior enables to save more UE power than the first RRM measurement behavior.

In some embodiments, the action 520 may also be implemented as action 520(a).

In action 520(a), when the first signal strength is below a fifth threshold, it is determined by the UE that the RRM measurement behavior includes the third RRM measurement behavior.

Here, determining that the RRM measurement behavior includes the third RRM measurement behavior may also be understood as: determining to operate based on the third RRM measurement behavior. Exemplarily, when the first signal strength is above a fifth threshold, the UE uses the first receiver to perform RRM relaxation measurement of the serving cell.

In some embodiments, when the UE operates based on the first RRM measurement behavior and the first signal strength is above the fifth threshold, the UE switches from the first RRM measurement behavior to the third RRM measurement behavior. That is, it supports the UE realizes switching between the first RRM measurement behavior and the third RRM measurement behavior according to the first signal strength, i.e., to realize switching between using the first receiver to perform normal measurement of the serving cell and using the first receiver to perform relaxation measurement of the serving cell. That is, when reception quality of the first receiver is good, an operation mode in which the first receiver performs relaxation measurement can be switched to, thereby reducing UE power consumption while ensuring the accuracy of the RRM measurement result.

In some embodiments, the action 520 may also be implemented as action 520(b).

In action 520(b), if the first signal strength is below a sixth threshold, it is determined by the UE that the RRM measurement behavior includes the first RRM measurement behavior.

Here, determining that the RRM measurement behavior includes the first RRM measurement behavior may also be understood as: determining to operate based on the first RRM measurement behavior. Exemplarily, when the first signal strength is below the sixth threshold, the UE uses the first receiver to perform normal measurement of the serving cell.

In some embodiments, when the UE operates based on the third RRM measurement behavior and the first signal strength is below the sixth threshold, the UE switches from the third RRM measurement behavior to the first RRM measurement behavior. That is, the UE is supported to realize switching between the third RRM measurement behavior and the first RRM measurement behavior according to the first signal strength, i.e., to realize switching between using the first receiver to perform relaxation measurement of the serving cell and using the first receiver to perform normal measurement of the serving cell. That is, when the reception quality of the first receiver is poor, an operation mode in which the first receiver performs normal measurement can be switched to, thereby improving the accuracy of the RRM measurement result.

In some embodiments, the fifth threshold may be specified by a communication protocol, or configured by the network side, or determined autonomously by the UE, or determined based on negotiation between the network side and the UE. Exemplarily, the fifth threshold is configured by a network device via high-layer signaling, where the high-layer signaling includes, for example, system information, or RRC signaling, or MAC CE.

In some embodiments, the sixth threshold may be specified by a communication protocol, or configured by the network side, or determined autonomously by the UE, or determined based on negotiation between the network side and the UE. Exemplarily, the sixth threshold is configured by a network device via high-layer signaling, where the high-layer signaling includes, for example, system information, or RRC signaling, or MAC CE.

In some embodiments, the fifth threshold and the sixth threshold have the same or different values.

For other contents, reference may be made to actions 320 and 420, which will not be repeated again here.

It is to be noted that actions 520 (a) and 520 (b) may be implemented separately or in free combination.

In action 540, the RRM measurement is performed by the UE according to the determined RRM measurement behavior.

In some embodiments, the UE determines that the RRM measurement behavior includes a first RRM measurement behavior, and then performs the first RRM measurement behavior. Exemplarily, when the first signal strength is below the sixth threshold, the UE performs normal measurement of the serving cell using the first receiver.

In some embodiments, the UE determines that the RRM measurement behavior includes a third RRM measurement behavior, and then performs the third RRM measurement behavior. Exemplarily, when the first signal strength is above a fifth threshold, the UE performs RRM relaxation measurement of the serving cell using the first receiver.

In some embodiments, the UE reports an RRM measurement report.

In summary, the method provided by the embodiments of the present application provides a feasible RRM measurement scheme for the UE having the first receiver and the second receiver, supporting the UE in determining the RRM measurement behavior according to the first signal strength, and it also supports the UE in realizing switching between normal measurement and relaxation measurement according to the first signal strength, thereby enabling the UE to adjust its RRM measurement behavior on the serving cell timely according to the current communication quality. Therefore, while ensuring the power-saving effect, it also facilitates improving the accuracy and efficiency of RRM measurement.

In some embodiments, the RRM measurement behavior supported by the UE includes a fourth RRM measurement behavior and/or a fifth RRM measurement behavior, and action 320 may be implemented as action 620 as illustrated in FIG. 6. FIG. 6 illustrates a schematic flowchart of a measurement method provided by an exemplary embodiment of the present application. The method is performed by UE and includes action 620. Optionally, the method may further include operation 640.

In action 620, an RRM measurement behavior is determined by the UE according to a first signal strength and/or a second signal strength, where the RRM measurement behavior includes a fourth RRM measurement behavior and/or a fifth RRM measurement behavior.

In the embodiment of the present application, the RRM measurement behavior may also be understood as RRM measurement operation or RRM measurement mode. The fourth RRM measurement behavior may also be referred to as a fourth RRM measurement operation or fourth RRM measurement mode, and the fifth RRM measurement behavior may also be referred to as a fifth RRM measurement operation or fifth RRM measurement mode.

In some embodiments, the fourth RRM measurement behavior includes performing RRM measurement of neighboring cell. The fifth RRM measurement behavior includes performing RRM relaxation measurement of neighboring cell.

In some embodiments, the fourth RRM measurement behavior includes using the second receiver to perform RRM measurement of neighboring cell. The fifth RRM measurement behavior includes using the second receiver to perform RRM relaxation measurement of neighboring cell.

In some embodiments, the fourth RRM measurement behavior includes using the first receiver to perform RRM measurement of neighboring cells. The fifth RRM measurement behavior includes using the first receiver to perform RRM relaxation measurement of neighboring cell.

In some embodiments, the fourth RRM measurement behavior includes using the first receiver to perform RRM measurement of neighboring cell. The fifth RRM measurement behavior includes using the second receiver to perform RRM relaxation measurement of neighboring cell.

In some embodiments, the fourth RRM measurement behavior includes using the second receiver to perform RRM measurement of neighboring cell. The fifth RRM measurement behavior includes using the first receiver to perform RRM relaxation measurement of neighboring cell.

In some embodiments, the fifth RRM measurement behavior is a normal measurement behavior compared to the fourth RRM measurement behavior. When the UE operates based on the fourth RRM measurement behavior, the first receiver and/or the second receiver are used to perform normal measurement of neighboring cell; and when the UE operates based on the fifth RRM measurement behavior, the first receiver and/or the second receiver are used to perform relaxation measurement of neighboring cell.

In some embodiments, a measurement time interval corresponding to the fifth RRM measurement behavior is greater than a measurement time interval corresponding to the fourth RRM measurement behavior; and/or a number of measured cells corresponding to the fifth RRM measurement behavior is smaller than a number of measured cells corresponding to the fourth RRM measurement behavior; and/or a number of measurement signals corresponding to the fifth RRM measurement behavior is smaller than a number of measurement signals corresponding to the fourth RRM measurement behavior; and/or a number of measurement frequency points corresponding to the fifth RRM measurement behavior is smaller than a number of measurement frequency points corresponding to the fourth RRM measurement behavior; and/or a measurement period corresponding to the fifth RRM measurement behavior is greater than a measurement period corresponding to the fourth RRM measurement behavior. That is, compared to the normal measurement of the neighboring cell, the relaxation measurement of the neighboring cell may be embodied in at least one of the following: a larger measurement time interval, a larger measurement period, a smaller number of measurement signals, a smaller number of measured cells, or a smaller number of measurement frequency points. Thus, the fifth RRM measurement behavior enables to reduce more UE power consumption than the fourth RRM measurement behavior.

In some embodiments, the action 620 may also be implemented as action 620(a).

In action 620(a), when the first signal strength and/or the second signal strength satisfy a second condition, it is determined by the UE that the RRM measurement behavior includes a fifth RRM measurement behavior.

Here, determining that the RRM measurement behavior includes the fifth RRM measurement behavior may also be understood as determining to operate based on the fifth RRM measurement behavior. Exemplarily, when the second condition is satisfied, the UE performs RRM relaxation measurement of the neighboring cell.

In some embodiments, the first signal strength and/or the second signal strength satisfying the second condition includes at least one of the following that:
- the first signal strength is above a seventh threshold;
- the second signal strength is above an eighth threshold; or
- the third signal strength is above a ninth threshold, the third signal strength being determined according to the first signal strength and the second signal strength.

That is, the second condition being satisfied may include that: the first signal strength is above the seventh threshold; or, the second signal strength is above the eighth threshold; or, the third signal strength is above the ninth threshold; or, the first signal strength is above the seventh threshold and the second signal strength is above the eighth threshold; or, the first signal strength is above the seventh threshold and the third signal strength is above the ninth threshold; or, the second signal strength is above the eighth threshold and the third signal strength is above the ninth threshold; or, the first signal strength is above the seventh threshold, the second signal strength is above the eighth threshold, and the third signal strength is above the ninth threshold.

In some embodiments, the third signal strength is a minimum value between the first signal strength and the second signal strength. Or, the third signal strength is a maximum value between the first signal strength and the second signal strength. Or, the third signal strength is an average value of the first signal strength and the second signal strength. Or, the third signal strength is a weighted average of the first signal strength and the second signal strength. Or, the third signal strength is a modified weighted average of the first signal strength and the second signal strength.

In some embodiments, when the UE operates based on the fourth RRM measurement behavior, and the first signal strength and/or the second signal strength satisfy the second condition, the UE switches from the fourth RRM measurement behavior to the fifth RRM measurement behavior. That is, it supports that the UE realizes switching between the fourth RRM measurement behavior and the fifth RRM measurement behavior according to the second condition, i.e., to realize switching between the normal measurement and the relaxation measurement of the neighboring cell. When the second condition is satisfied, it means that communication quality in the current system is good, and accurate neighbor cell measurement results can be obtained. Therefore, an operating mode in which neighbor cell relaxation measurement is performed can be switched to, thereby reducing power consumption on the UE side.

In some embodiments, the action 620 may also be implemented as action 620(b).

In action 620(b), when the first signal strength and/or the second signal strength do not satisfy the second condition, it is determined by the UE that the RRM measurement behavior includes a fourth RRM measurement behavior.

Here, determining that the RRM measurement behavior includes the fourth RRM measurement behavior may also be understood as determining to operate based on the fifth RRM measurement behavior. Exemplarily, when the second condition is not satisfied, the UE performs normal measurement of neighboring cell.

In some embodiments, the first signal strength and/or the second signal strength not satisfying the second condition includes at least one of that: the first signal strength is below a seventh threshold; the first signal strength is equal to the seventh threshold; the second signal strength is below an eighth threshold; the second signal strength is equal to the eighth threshold; the third signal strength is below a ninth threshold; or the third signal strength is equal to the ninth threshold.

In some embodiments, when the UE operates based on the fifth RRM measurement behavior, and the first signal strength and/or the second signal strength do not satisfy the second condition, the UE switches from the fifth RRM measurement behavior to the fourth RRM measurement behavior. That is, the UE is supported to realize switching between the fifth RRM measurement behavior and the fourth RRM measurement behavior according to the second condition, i.e., to realize switching between the relaxation measurement and the normal measurement of the neighboring cell. When the second condition is not satisfied, it means that communication quality in the current system is poor, and accurate neighbor cell measurement results cannot be obtained through the fifth RRM measurement behavior. Therefore, an operating mode in which normal neighbor cell measurement is performed can be switched to, thereby improving the accuracy and efficiency of the RRM measurement results.

In some embodiments, the seventh threshold may be specified by a communication protocol, or configured by the network side, or determined autonomously by the UE, or determined based on negotiation between the network side and the UE. Exemplarily, the seventh threshold is configured by a network device via high-layer signaling, where the high-layer signaling includes, for example, system information, or RRC signaling, or MAC CE.

In some embodiments, the eighth threshold may be specified by a communication protocol, or configured by the network side, or determined autonomously by the UE, or determined based on negotiation between the network side and the UE. Exemplarily, the eighth threshold is configured by a network device via high-layer signaling, where the high-layer signaling includes, for example, system information, or RRC signaling, or MAC CE.

In some embodiments, the ninth threshold may be specified by a communication protocol, or configured by the network side, or determined autonomously by the UE, or determined based on negotiation between the network side and the UE. Exemplarily, the ninth threshold is configured by a network device via high-layer signaling, where the high-layer signaling includes, for example, system information, or RRC signaling, or MAC CE.

In some embodiments, the values of the seventh threshold, the eighth threshold, and the ninth threshold are the same or different.

For other contents, reference may be made to actions 320, 420 and 520, which will not be repeated again here.

It is to be noted that actions 620(a) and 620(b) may be implemented separately or in free combination. For example, actions 620(a) and 620(b) are performed.

In action 640, the RRM measurement is performed by the UE according to the determined RRM measurement behavior.

In some embodiments, the UE determines that the RRM measurement behavior includes a fourth RRM measurement behavior, and then performs the fourth RRM measurement behavior. Exemplarily, when the first signal strength and/or the second signal strength do not satisfy the second condition, the UE uses the second receiver to perform normal measurement of neighboring cell.

In some embodiments, the UE determines that the RRM measurement behavior includes a fifth RRM measurement behavior, and then performs the fifth RRM measurement behavior. Exemplarily, when the first signal strength and/or the second signal strength satisfy the second condition, the UE ues the second receiver to perform relaxation measurement of neighboring cell.

In some embodiments, the UE reports an RRM measurement report.

In summary, the method provided by the embodiments of the present application provide a feasible RRM measurement scheme for a UE having the first receiver and the second receiver, supporting the UE in determining a RRM measurement behavior according to the first signal strength and the second signal strength, thereby facilitating the UE in performing an appropriate RRM measurement behavior to realize switching between different measurement behaviors, and facilitating the UE to timely adjust the RRM measurement behavior according to the current communication quality. Therefore, while ensuring the power-saving effect, it also facilities improving the accuracy and efficiency of RRM measurement.

In some embodiments, the embodiment illustrated in FIG. 4 may be used in combination with the embodiment illustrated in FIG. 5, i.e., the UE performs at least operations 420 and 520.

In some embodiments, the embodiment illustrated in FIG. 4 may be used in combination with the embodiment illustrated in FIG. 6, i.e., the UE performs at least actions 420 and 620.

In some embodiments, the embodiment illustrated in FIG. 5 may be used in combination with the embodiment illustrated in FIG. 6, i.e., the UE performs at least actions 520 and 620.

In some embodiments, the embodiment illustrated in FIG. 4, the embodiment illustrated in FIG. 5, and the embodiment illustrated in FIG. 6 may be used in combination, i.e., the UE performs at least actions 420, 520, and 620.

FIG. 7 illustrates a schematic flowchart of a measurement method provided by an exemplary embodiment of the present application. The method is performed by a network device and includes action 720.

In action 720, a first signal and/or a second signal is sent, where a first signal strength and/or a second signal strength are used to determine an RRM measurement behavior.

The first signal strength is signal strength of a first signal, and the first signal includes a measurement signal corresponding to a first receiver.

The second signal strength is signal strength of a second signal, and the second signal includes a measurement signal corresponding to a second receiver.

In some embodiments, operating energy consumption of the first receiver is lower than operating energy consumption of the second receiver. Exemplarily, it may be embodied in at least one of the following that: the structure of the first receiver is simpler than the structure of the second receiver; waveform adopted by the first signal is simpler than the waveform adopted by the second signal; power consumption required for generating the first signal is lower than power consumption required for generating the second signal; power consumption required for receiving the first signal is lower than power consumption required for receiving the second signal; or power consumption required for detecting the first signal is lower than power consumption required for detecting the second signal.

In some embodiments, the first receiver may be referred to as at least one of: a WUR, an LP-WUR, an ULP-WUR, a low power receiver, an ultra-low power receiver, a zero power receiver, or a secondary receiver.

In some embodiments, the second receiver may be referred to as at least one of: a legacy receiver, or a main receiver.

In some embodiments, the RRM measurement behavior may also be understood as an RRM measurement operation or RRM measurement mode. Determining the RRM measurement behavior may also be understood as determining by the UE its behavior, operation, and mode for performing the RRM measurement. The first signal strength and/or the second signal strength being used to determine the RRM measurement behavior, may also be understood as that the first signal strength and/or the second signal strength are used to determine how to perform the RRM measurement, or the first signal strength and/or the second signal strength are used to determine an RRM measurement mode to be used.

With reference to action 420, the first signal strength and/or the second signal strength may be used to determine the first RRM measurement behavior and/or the second RRM measurement behavior, which are not repeated again here.

With reference to action 520, the first signal strength and/or the second signal strength may be used to determine the first RRM measurement behavior and/or the third RRM measurement behavior, which are not repeated again here.

With reference to action 620, the first signal strength and/or the second signal strength may be used to determine the fourth RRM measurement behavior and/or the fifth RRM measurement behavior, which are not repeated again here.

In some embodiments, the network device further sends high-layer signaling for configuring at least one of: a first threshold, a second threshold, a third threshold, a fourth threshold, a fifth threshold, a sixth threshold, a seventh threshold, an eighth threshold, or a ninth threshold.

In summary, according to the method provided by the embodiments of the present application, the network device sends the first signal and/or the second signal to realize the determination of the RRM measurement behavior, so that a feasible RRM measurement scheme is provided for the UE having the first receiver and the second receiver.

FIG. 8 illustrates a structural block diagram of a measurement apparatus provided by an exemplary embodiment of the present application. The apparatus may be implemented as a UE as illustrated in any one of FIGS. 1 to 6, or as a part of UE as illustrated in any one of FIGS. 1 to 6. The apparatus includes a first receiving module 812, a second receiving module 814, and a processing module 820, the first receiving module 812 having lower operating energy consumption than the second receiving module 814. Optionally, the apparatus further includes a sending module 830.

The processing module 820 is configured to determine an RRM measurement behavior according to a first signal strength and/or a second signal strength. The first signal strength is signal strength of a first signal, the second signal strength is strength of a second signal, the first signal includes a measurement signal corresponding to the first receiving module 812, and the second signal includes a measurement signal corresponding to the second receiving module 814.

In some embodiments, the RRM measurement behavior includes: a first RRM measurement behavior and/or a second RRM measurement behavior. The first RRM measurement behavior includes using the first receiving module 812 to perform RRM measurement of a serving cell, and the second RRM measurement behavior includes using the second receiving module 814 to perform RRM measurement of the serving cell and/or a neighboring cell.

In some embodiments, the processing module 820 is configured to: when the first signal strength is below a first threshold, determine that the RRM measurement behavior includes the second RRM measurement behavior, or determine that the RRM measurement behavior includes the first RRM measurement behavior and the second RRM measurement behavior.

In some embodiments, the processing module 820 is further configured to: when the apparatus operates based on the first RRM measurement behavior, and the first signal strength is below the first threshold, switch to operating based on the second RRM measurement behavior; or, when the apparatus operates based on the first RRM measurement behavior and the first signal strength is below the first threshold, switches to operating based on the first RRM measurement behavior and the second RRM measurement behavior.

In some embodiments, the processing module 820 is configured to determine that the RRM measurement behavior includes the first RRM measurement behavior, when the first signal strength and/or the second signal strength satisfy a first condition.

In some embodiments, the processing module 820 is further configured to: when the apparatus operates based on the first RRM measurement behavior and the second measurement behavior, and the first signal strength and/or the second signal strength satisfy a first condition, switch to operating based on the first RRM measurement behavior.

In some embodiments, the first signal strength and/or the second signal strength satisfying the first condition includes at least one of the following that: the first signal strength is above a second threshold; the second signal strength is above a third threshold; or the third signal strength is above a fourth threshold.

In some embodiments, the processing module 820 is further configured to determine the third signal strength according to the first signal strength and the second signal strength.

In some embodiments, the RRM measurement behavior includes: the first RRM measurement behavior and/or a third RRM measurement behavior. The first RRM measurement behavior includes using the first receiving module 812 to perform RRM measurement of a serving cell, and the third RRM measurement behavior includes using the first receiving module 812 to perform RRM relaxation measurement of the serving cell.

In some embodiments, the processing module 820 is configured to: determine that the RRM measurement behavior includes the third RRM measurement behavior when the first signal strength is above a fifth threshold; and/or determining that the RRM measurement behavior includes the first RRM measurement behavior when the first signal strength is below a sixth threshold.

In some embodiments, the processing module 820 is further configured to: when the apparatus operates based on the first RRM measurement behavior, and the first signal strength is above the fifth threshold, switch to operating based on the third RRM measurement behavior; or, when the device operating based on the third RRM measurement behavior and the first signal strength is below the sixth threshold, switches to operating based on the first RRM measurement behavior.

In some embodiments, a measurement time interval corresponding to the third RRM measurement behavior is greater than a measurement time interval corresponding to the first RRM measurement behavior; and/or a number of measurement signals corresponding to the third RRM measurement behavior is smaller than a number of measurement signals corresponding to the first RRM measurement behavior.

In some embodiments, the RRM measurement behavior includes: a fourth RRM measurement behavior and/or a fifth RRM measurement behavior. The fourth RRM measurement behavior includes performing RRM measurement of neighboring cell, and the fifth RRM measurement behavior includes performing RRM relaxation measurement of neighboring cell.

In some embodiments, the processing module 820 is configured to: determine that the RRM measurement behavior includes the fifth RRM measurement behavior, when the first signal strength and/or the second signal strength satisfy a second condition; and/or determining that the RRM measurement behavior includes the fourth RRM measurement behavior, when the first signal strength and/or the second signal strength do not satisfy the second condition.

In some embodiments, the processing module 820 is further configured to: when the apparatus operates based on the fourth RRM measurement behavior, and the first signal strength and/or the second signal strength satisfy the second condition, switch to operating based on the fifth RRM measurement behavior; or, when the apparatus operates based on the fifth RRM measurement behavior, and the first signal strength and/or the second signal strength do not satisfy the second condition, switch to operating based on the fourth RRM measurement behavior.

In some embodiments, the first signal strength and/or the second signal strength satisfying the second condition includes at least one of that: the first signal strength is above a seventh threshold; the second signal strength is above an eighth threshold; or the third signal strength is above a ninth threshold.

In some embodiments, a measurement time interval corresponding to the fifth RRM measurement behavior is greater than a measurement time interval corresponding to the fourth RRM measurement behavior; and/or a number of measured cells corresponding to the fifth RRM measurement behavior is smaller than a number of measured cells corresponding to the fourth RRM measurement behavior; and/or a number of measurement signals corresponding to the fifth RRM measurement behavior is smaller than a number of measurement signals corresponding to the fourth RRM measurement behavior; and/or a number of measurement frequency points corresponding to the fifth RRM measurement behavior is smaller than a number of measurement frequency points corresponding to the fourth RRM measurement behavior.

In some embodiments, the third signal strength is a minimum value between the first signal strength and the second signal strength; or, the third signal strength is a maximum value between the first signal strength and the second signal strength; or, the third signal strength is an average value of the first signal strength and the second signal strength; or, the third signal strength is a weighted average of the first signal strength and the second signal strength; or, the third signal strength is a modified weighted average of the first signal strength and the second signal strength.

In some embodiments, the processing module 820 is further configured to perform RRM measurement according to the determined RRM measurement behavior.

In some embodiments, the processing module 820 is configured to perform one or more of actions 320, 420, 520, 620, 440, 540, 640.

In some embodiments, the processing module 820 is further configured to obtain a first signal strength and/or a second signal strength.

In some embodiments, the first receiving module 812 is configured to receive at least one of: a wake-up signal, an energy-saving signal, a first signal, or high-layer signaling.

In some embodiments, the first receiving module 812 is further configured to measure a first signal and/or obtain a first signal strength.

In some embodiments, the second receiving module 814 is configured to receive at least one of: a second signal, high layer signaling, a PDCCH, or a PDSCH.

In some embodiments, the second receiving module 814 is further configured to measure a second signal and/or obtain a second signal strength.

In some embodiments, the apparatus further includes a sending module 830, configured to send an RRM measurement report.

In summary, the apparatus provided by the embodiments of the present application supports switching between different measurement behaviors according to signal strength of measurement signals corresponding to different receiving modules, so that the apparatus can adjust the RRM measurement behavior according to current communication quality timely. Therefore, while ensuring the energy-saving effect, it also helps to improve the accuracy and efficiency of RRM measurement.

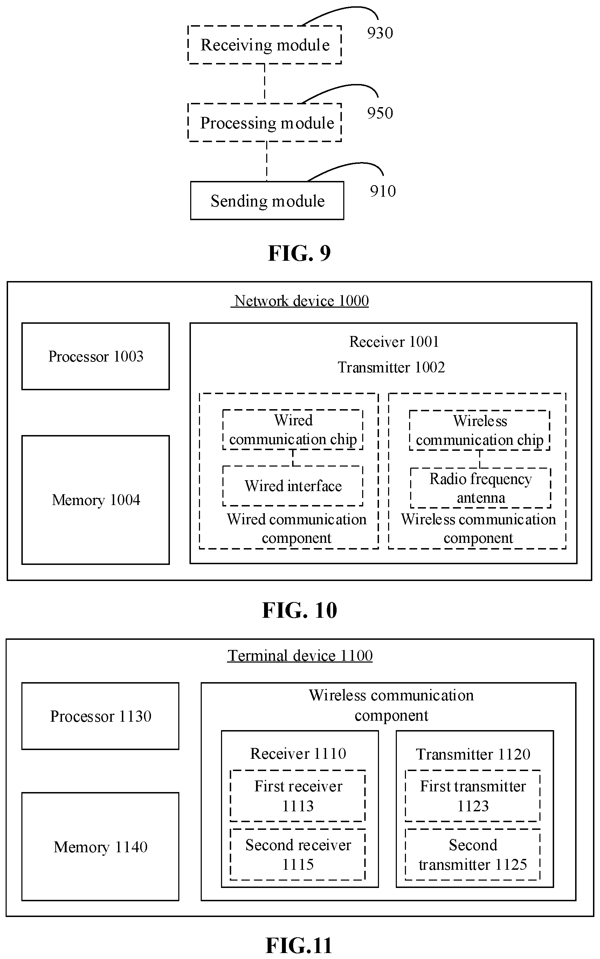

FIG. 9 illustrates a structural block diagram of a measurement apparatus according to an exemplary embodiment of the present application. The apparatus may be implemented as the network device as illustrated in FIGS. 2 and 7, or as a part of the network device as illustrated in FIGS. 2 and 7. Optionally, the apparatus further includes a sending module 910. Optionally, the apparatus further includes a receiving module 930 and/or a processing module 950.

The sending module 910 is configured to send a first signal and/or a second signal, where a first signal strength and/or a second signal strength are used to determine a RRM measurement behavior, the first signal strength is signal strength of the first signal, the second signal strength is strength of the second signal, the first signal includes a measurement signal corresponding to a first receiver, and the second signal includes a measurement signal corresponding to a second receiver..

In some embodiments, the RRM measurement behavior includes: a first RRM measurement behavior and/or a second RRM measurement behavior. The first RRM measurement behavior includes using the first receiver to perform RRM measurement of a serving cell, and the second RRM measurement behavior includes using the second receiver to perform RRM measurement of the serving cell and/or a neighboring cell.

In some embodiments, when the first signal strength is below a first threshold, the first signal strength is used to determine that the RRM measurement behavior includes the second RRM measurement behavior, or to determine that the RRM measurement behavior includes the first RRM measurement behavior and the second RRM measurement behavior.

In some embodiments, when the first signal strength and/or the second signal strength satisfies a first condition, the first signal strength and/or the second signal strength are used to determine that the RRM measurement behavior includes the first RRM measurement behavior.

In some embodiments, the first signal strength and/or the second signal strength satisfying the first condition includes at least one of the following that: the first signal strength is above a second threshold; the second signal strength is above a third threshold; or a third signal strength above a fourth threshold, the third signal strength being determined according to the first signal strength and the second signal strength.

In some embodiments, the RRM measurement behavior includes: the first RRM measurement behavior and/or a third RRM measurement behavior. The first RRM measurement behavior includes using the first receiver to perform RRM measurement of a serving cell, and the third RRM measurement behavior includes using the first receiver to perform RRM relaxation measurement of the serving cell.

In some embodiments, when the first signal strength is above a fifth threshold, the first signal strength is used to determine that the RRM measurement behavior includes the third RRM measurement behavior; and/or, when the first signal strength is below a sixth threshold, the first signal strength is used to determine that the RRM measurement behavior includes the first RRM measurement behavior.

In some embodiments, a measurement time interval corresponding to the third RRM measurement behavior is greater than a measurement time interval corresponding to the first RRM measurement behavior; and/or a number of measurement signals corresponding to the third RRM measurement behavior is smaller than a number of measurement signals corresponding to the first RRM measurement behavior.

In some embodiments, the RRM measurement behavior includes: a fourth RRM measurement behavior and/or a fifth RRM measurement behavior. The fourth RRM measurement behavior includes performing RRM measurement of neighboring cell, and the fifth RRM measurement behavior includes performing RRM relaxation measurement of neighboring cell.

In some embodiments, when the first signal strength and/or the second signal strength satisfies a second condition, the first signal strength and/or the second signal strength are used to determine that the RRM measurement behavior includes the fifth RRM measurement behavior; when the first signal strength and/or the second signal strength do not satisfy the second condition, the first signal strength and/or the second signal strength are used to determine that the RRM measurement behavior includes the fourth RRM measurement behavior.

In some embodiments, the first signal strength and/or the second signal strength satisfying the second condition includes at least one of the following that: the first signal strength is above a seventh threshold; the second signal strength is above an eighth threshold; or a third signal strength above a ninth threshold, the third signal strength being determined according to the first signal strength and the second signal strength.

In some embodiments, a measurement time interval corresponding to the fifth RRM measurement behavior is greater than a measurement time interval corresponding to the fourth RRM measurement behavior; and/or a number of measured cells corresponding to the fifth RRM measurement behavior is smaller than a number of measured cells corresponding to the fourth RRM measurement behavior; and/or a number of measurement signals corresponding to the fifth RRM measurement behavior is smaller than a number of measurement signals corresponding to the fourth RRM measurement behavior; and/or a number of measurement frequency points corresponding to the fifth RRM measurement behavior is smaller than a number of measurement frequency points corresponding to the fourth RRM measurement behavior.

In some embodiments, the third signal strength is a minimum value between the first signal strength and the second signal strength; or, the third signal strength is a maximum value between the first signal strength and the second signal strength; or, the third signal strength is an average value of the first signal strength and the second signal strength; or, the third signal strength is a weighted average of the first signal strength and the second signal strength; or, the third signal strength is a modified weighted average of the first signal strength and the second signal strength.

In some embodiments, the sending module 910 is further configured to send at least one of: high-layer signaling, a wake-up signal, an energy-saving signal, a PDCCH, or a PDSCH.

In some embodiments, the high layer signaling is used to configure at least one of: a first threshold, a second threshold, a third threshold, a fourth threshold, a fifth threshold, a sixth threshold, a seventh threshold, an eighth threshold, or a ninth threshold.

In some embodiments, the sending module 910 is configured to perform the action 720.

In some embodiments, the apparatus further includes a receiving module 930, configured to receive an RRM measurement report.

In some embodiments, the apparatus further includes a processing module 950, configured to determine a measurement configuration, a transmission configuration, or the like for the UE.

In summary, the apparatus provided by the embodiments of the present application supports sending the first signal and/or the second signal to realize the determination of the RRM measurement behavior, and thus provides a feasible RRM measurement scheme for the UE having the first receiver and the second receiver.

It should be noted that when implementing its functions, the apparatus provided in the foregoing embodiments is described only using the division of the above functional modules as an example. In practical applications, the above functions may be assigned to different functional modules as needed, that is, the internal structure of the terminal device may be divided into different functional modules to complete all or part of the functions described above. In addition, the apparatus provided in the foregoing embodiments and the method embodiments are based on the same concept.

FIG. 10 illustrates a schematic structural diagram of a network device 1000 provided by an exemplary embodiment of the present application. The network device includes at least one of a receiver 1001, a transmitter 1002, a processor 1003, a memory 1004, or a bus (not shown). The network device 1000 may be used to perform part or all of the above method actions performed by the network device.

Here, the receiver 1001 is used to implement a reception function, and the transmitter 1002 is used to implement a sending function.

In some embodiments, the receiver 1001 and the transmitter 1002 may be implemented as a communication component, which may be a communication chip and may be referred to as a transceiver. In some embodiments, the receiver 1001 may be used to implement the functions and actions of the receiving module 930 as described above, and the transmitter 1002 may be used to implement the functions and actions of the sending module 910 as described above.

In some embodiments, the receiver 1001 and the transmitter 1002 may be implemented as a wireless communication component and/or a wired communication component. Optionally, the wireless communication component includes a wireless communication chip and/or a radio frequency antenna. Optionally, the wired communication component includes a wired communication chip and/or a wired interface.

The processor 1003 includes one or more processing cores, and the processor 1003 runs software programs and modules to perform various functional applications and information processing. In some embodiments, the processor 1003 may be used to implement the functions and actions of the processing module 950 as described above.

The memory 1004 may be configured to store a computer program executed by the processor 1003, and the processor 1401 is configured to execute the computer program to implement various actions performed by the network device in the above method embodiments.

In some embodiments, the memory 1004 may be connected to the processor 1003, the receiver 1001 and the transmitter 1002.

Further, the memory 1004 may be implemented by any type of volatile or non-volatile storage device, or their combination. The volatile or non-volatile storage device includes, but is not limited to, a magnetic disk or an optical disc, an Electrically Erasable Programmable Read-Only Memory (EEPROM), an Erasable Programmable Read-Only Memory (EPROM), a Static Random Access Memory (SRAM), a Read-Only Memory (ROM), a magnetic disk storage, or a Programmable Read-Only Memory (PROM).

In some embodiments, the receiver 1001 independently performs reception of signals/data, or the processor 1003 controls the receiver 1001 to perform reception of signals/data, or the processor 1003 requests the receiver 1001 to perform reception of signals/data, or the processor 1003 cooperates with the receiver 1001 to perform reception of signals/data.

In some embodiments, the transmitter 1002 independently performs sending of signals/data, or the processor 1003 controls the transmitter 1002 to perform sending of signals/data, or the processor 1003 requests the transmitter 1002 to perform sending of signals/data, or the processor 1003 cooperates with the transmitter 1002 to perform sending of signals/data.

For details not described in detail in this embodiment, reference may be made to the above embodiments, which will not be repeated here.

FIG. 11 illustrates a schematic structural diagram of a terminal device 1100 provided by an exemplary embodiment of the present application. The network device includes at least one of a receiver 1110, a transmitter 1120, a processor 1130, a memory 1140, or a bus (not shown). The terminal device 1100 may be used to perform part or all of the actions performed by the UE as described above.

Here, the receiver 1110 is used to implement a reception function, and the transmitter 1120 is used to implement a sending function.

In some embodiments, the receiver 1110 and the transmitter 1120 may be implemented as a communication component, which may be a communication chip and may be referred to as a transceiver. Exemplarily, the receiver 1110 and the transmitter 1120 may be implemented as a wireless communication component. Optionally, the wireless communication component includes a wireless communication chip and/or a radio frequency antenna (not shown).

In some embodiments, the receiver 1110 may be implemented as a first receiver 1113 and a second receiver 1115. The first receiver 1113 may be used to implement the functions and actions of the first receiving module 812 as described above, and the second receiver 1115 may be used to implement the functions and actions of the second receiving module 814 as described above.

In some embodiments, the first receiver 1113 and the second receiver 1115 are two independently operated receivers, that is, the receiver 1110 includes two independent first receivers 1113 and second receivers 1115. Or, the receiver 1110 is implemented as a combined receiver of the first receiver 1113 and the second receiver 1115.

In some embodiments, the first receiver 1113 is implemented as a WUR, or may also be referred to as an LP-WUR, an ULP-WUR, a low power receiver, an ultra-low power receiver, a zero power receiver, a secondary receiver, or the like.

In some embodiments, the second receiver 1115 is implemented as a main receiver or a legacy receiver.

In some embodiments, the transmitter 1120 may be used to implement the functions and actions of the sending module 830 as described above. Optionally, the transmitter 1120 may be implemented as a first transmitter 1123 and/or a second transmitter 1125.

In some embodiments, the first transmitter 1123 and the second transmitter 1125 are two independently operated transmitters, that is, the transmitter 1120 includes two first and second transmitters 1123 and 1125 that are independent of each other. Or, the transmitter 1120 is implemented as a combined transmitter of the first transmitter 1123 and the second transmitter 1125.

In some embodiments, the first transmitter 1123 is implemented as a backscatter transmitter and the second transmitter 1125 is implemented as a main transmitter.

In some embodiments, the processor 1130 and the receiver 1110 may be implemented as one module, or the processor 1130 may be implemented as part of the receiver 1110.

The processor 1130 includes one or more processing cores, and the processor 1130 runs software programs and modules to perform various functional applications and information processing. In some embodiments, the processor 1130 may be used to implement the functions and actions of the processing module 820 as described above.

The memory 1140 may be configured to store a computer program executed by the processor 1130, and the processor 1130 is configured to execute the computer program to implement various actions performed by the network device in the above method embodiments.

In some embodiments, the memory 1140 may be connected to the processor 1130, the receiver 1110 and the transmitter 1120.

Further, the memory 1140 may be implemented by any type of volatile or non-volatile storage device, or a combination thereof. The volatile or non-volatile storage device includes, but is not limited to, a magnetic disk or an optical disc, an EEPROM, an EPROM, a SRAM, a ROM, a magnetic memory, a flash memory, an PROM.

In some embodiments, the receiver 1110 independently performs reception of signals/data, or the processor 1130 controls the receiver 1110 to perform reception of signals/data, or the processor 1130 requests the receiver 1110 to perform reception of signals/data, or the processor 1130 cooperates with the receiver 1110 to perform reception of signals/data.

In some embodiments, the transmitter 1120 independently performs sending of signals/data, or the processor 1130 controls the transmitter 1120 to perform sending of signals/data, or the processor 1130 requests the transmitter 1120 to perform sending of signals/data, or the processor 1130 cooperates with the transmitter 1120 to perform sending of signals/data.

For details not described in detail in this embodiment, reference may be made to the above embodiments, which will not be repeated here.

In an exemplary embodiment of the present application, there is provided a chip, including programmable logic circuitry and/or program instructions, where the chip, when running on a communication device, is used to implement the measurement method provided by various method embodiments as described above.

In some embodiments, the chip includes a first receiving module 812, a second receiving module 814, and a processing module 820, and operating energy consumption of the first receiving module 812 is lower than operating energy consumption of the second receiving module 814. Optionally, the apparatus further includes a sending module 830. For relevant content, reference may be made to the foregoing, which will not be repeated again here.

In some embodiments, the chip includes a sending module 910. Optionally, the apparatus further includes a receiving module 930 and/or a processing module 950. For relevant content, reference may be made to the foregoing, which will not be repeated again here.

According to an exemplary embodiment of the present application, there is further provided a computer-readable storage medium, having stored therein at least one computer program, which is loaded and executed by a processor to implement the measurement method provided by various method embodiments as described above.

According to an exemplary embodiment of the present application, there is further provided a computer program that, when running on a processor of a computer device, causes the computer device to implement the measurement method as described above.

In an exemplary embodiment of the present application, there is also provided a computer program including computer instructions, where a processor of a computer device executes the computer instructions to cause the computer device to execute the measurement method as described above.

Those of ordinary skill in the art can understand that all or part of the operations for implementing the above embodiments can be completed by hardware, or by a program instructing relevant hardware, and the program may be stored in a computer-readable storage medium. The aforementioned storage medium may be a read-only memory, a magnetic disk, or an optical disc, etc.

The above are only optional embodiments of the present application, and are not intended to limit the present application. Any modification, equivalent substitution, improvement, etc. made within the spirit and principle of the present application shall be included in the scope of protection of the present application.

## Claims

1. A measurement method, performed by a terminal device, wherein the terminal device has a first receiver and a second receiver, the first receiver having a lower operating energy consumption than the second receiver, the method comprising:
determining a radio resource management (RRM) measurement behavior based on a first signal strength and/or a second signal strength,
wherein the first signal strength is strength of a first signal, the second signal strength is strength of a second signal, the first signal comprises a measurement signal corresponding to the first receiver, and the second signal comprises a measurement signal corresponding to the second receiver.

2. The method of claim 1, wherein the RRM measurement behavior comprises: a first RRM measurement behavior and/or a second RRM measurement behavior; wherein the first RRM measurement behavior comprises using the first receiver to perform RRM measurement of a serving cell , and the second RRM measurement behavior comprises using the second receiver to perform RRM measurement of the serving cell and/or a neighboring cell.

3. The method of claim 2, wherein determining the RRM measurement behavior based on the first signal strength and/or the second signal strength comprises:
when the first signal strength is below a first threshold, determining that the RRM measurement behavior comprises the second RRM measurement behavior, or determining that the RRM measurement behavior comprises the first RRM measurement behavior and the second RRM measurement behavior.

4. The method of claim 3, further comprising:
when the terminal device operates using the first RRM measurement behavior and the first signal strength is below the first threshold, switching to operating based on the second RRM measurement behavior; or
when the terminal device operates using the first RRM measurement behavior and the first signal strength is below the first threshold, switching to operating based on the first RRM measurement behavior and the second RRM measurement behavior.

5. The method of claim 2 or 3 or 4, wherein determining the RRM measurement behavior based on the first signal strength and/or the second signal strength comprises:
determining that the RRM measurement behavior comprises the first RRM measurement behavior, when the first signal strength and/or the second signal strength satisfy a first condition.

6. The method of claim 5, further comprising:
when the terminal device operates using the first RRM measurement behavior and the second measurement behavior, and the first signal strength and/or the second signal strength satisfy a first condition, switching to operating based on the first RRM measurement behavior.

7. The method of claim 5 or 6, wherein the first signal strength and/or the second signal strength satisfying the first condition, comprises at least one of the following that:
the first signal strength is above a second threshold;
the second signal strength is above a third threshold; or
a third signal strength is above a fourth threshold, the third signal strength being determined according to the first signal strength and the second signal strength.

8. The method of any one of claims 1 to 7, wherein the RRM measurement behavior comprises: a first RRM measurement behavior and/or a third RRM measurement behavior; wherein the first RRM measurement behavior comprises using the first receiver to perform RRM measurement of a serving cell, and the third RRM measurement behavior comprises using the first receiver to perform RRM relaxation measurement of the serving cell.

9. The method of claim 8, wherein determining the RRM measurement behavior based on the first signal strength and/or the second signal strength comprises at least one of the following:
determining that the RRM measurement behavior comprises the third RRM measurement behavior, when the first signal strength is above a fifth threshold; or
determining that the RRM measurement behavior comprises the first RRM measurement behavior, when the first signal strength is below a sixth threshold .

10. The method of claim 9, further comprising:
when the terminal device operates using the first RRM measurement behavior and the first signal strength is above the fifth threshold, switching to operating based on the third RRM measurement behavior; or
when the terminal device operates using the third RRM measurement behavior and the first signal strength is below the sixth threshold, switching to operating based on the first RRM measurement behavior.

11. The method of claim 8 or 9 or 10, wherein a measurement time interval corresponding to the third RRM measurement behavior is greater than a measurement time interval corresponding to the first RRM measurement behavior; and/or a number of measurement signals corresponding to the third RRM measurement behavior is less than a number of measurement signals corresponding to the first RRM measurement behavior.

12. The method of any one of claims 1 to 11, wherein the RRM measurement behavior comprises: a fourth RRM measurement behavior and/or a fifth RRM measurement behavior; wherein the fourth RRM measurement behavior comprises performing RRM measurement of a neighboring cell, and the fifth RRM measurement behavior comprises performing RRM relaxation measurement of a neighboring cell.

13. The method of claim 12, wherein determining the RRM measurement behavior based on the first signal strength and/or the second signal strength comprises at least one of the following:
determining that the RRM measurement behavior comprises the fifth RRM measurement behavior, when the first signal strength and/or the second signal strength satisfy a second condition; or
determining that the RRM measurement behavior comprises the fourth RRM measurement behavior, when the first signal strength and/or the second signal strength do not satisfy the second condition.

14. The method of claim 13, further comprising:
when the terminal device operates using the fourth RRM measurement behavior, and the first signal strength and/or the second signal strength satisfy the second condition, switching to operating based on the fifth RRM measurement behavior; or
when the terminal device operates using the fifth RRM measurement behavior, and the first signal strength and/or the second signal strength do not satisfy the second condition, switching to operating based on the fourth RRM measurement behavior.

15. The method of claim 13 or 14, wherein the first signal strength and/or the second signal strength satisfying the second condition, comprises at least one of the following that:
the first signal strength is above a seventh threshold;
the second signal strength is above an eighth threshold; or
a third signal strength is above a ninth threshold, the third signal strength being determined according to the first signal strength and the second signal strength.

16. The method of any one of claims 12 to 15, wherein a measurement time interval corresponding to the fifth RRM measurement behavior is greater than a measurement time interval corresponding to the fourth RRM measurement behavior; and/or, a number of measured cells corresponding to the fifth RRM measurement behavior is less than a number of measured cells corresponding to the fourth RRM measurement behavior; and/or, a number of measurement signals corresponding to the fifth RRM measurement behavior is less than a number of measurement signals corresponding to the fourth RRM measurement behavior; and/or, a number of measurement frequency points corresponding to the fifth RRM measurement behavior is less than a number of measurement frequency points corresponding to the fourth RRM measurement behavior.

17. The method of claim 7 or 15, wherein
the third signal strength is a minimum value between the first signal strength and the second signal strength; or
the third signal strength is a maximum value between the first signal strength and the second signal strength; or
the third signal strength is an average of the first signal strength and the second signal strength; or
the third signal strength is a weighted average of the first signal strength and the second signal strength; or
the third signal strength is a modified weighted average of the first signal strength and the second signal strength.

18. A measurement method, performed by a network device, the method comprising:
sending a first signal and/or a second signal;
wherein a first signal strength and/or a second signal strength are used to determine a radio resource management (RRM) measurement behavior, the first signal strength is strength of the first signal, the second signal strength is strength of the second signal, the first signal comprises a measurement signal corresponding to a first receiver, and the second signal comprises a measurement signal corresponding to a second receiver.

19. The method of claim 18, wherein the RRM measurement behavior comprises: a first RRM measurement behavior and/or a second RRM measurement behavior, wherein the first RRM measurement behavior comprises performing RRM measurement of a serving cell using the first receiver, and the second RRM measurement behavior comprises performing RRM measurement of the serving cell and/or a neighboring cell using the second receiver.

20. The method of claim 19, wherein when the first signal strength is below a first threshold, the first signal strength is used to determine that the RRM measurement behavior comprises the second RRM measurement behavior, or to determine that the RRM measurement behavior comprises the first RRM measurement behavior and the second RRM measurement behavior.

21. The method of claim 19 or 20, wherein when the first signal strength and/or the second signal strength satisfy a first condition, the first signal strength and/or the second signal strength are used to determine that the RRM measurement behavior comprises the first RRM measurement behavior.

22. The method of claim 21, wherein the first signal strength and/or the second signal strength satisfying the first condition comprises at least one of the following that: the first signal strength is above a second threshold; the second signal strength is above a third threshold; or a third signal strength is above a fourth threshold, the third signal strength being determined according to the first signal strength and the second signal strength.

23. The method of any one of claims 18 to 22, wherein the RRM measurement behavior comprises: a first RRM measurement behavior and/or a third RRM measurement behavior; wherein the first RRM measurement behavior comprises performing RRM measurement of a serving cell using the first receiver, and the third RRM measurement behavior comprises performing RRM relaxation measurement of the serving cell using the first receiver.

24. The method of claim 23, wherein
when the first signal strength is above a fifth threshold, the first signal strength is used to determine that the RRM measurement behavior comprises the third RRM measurement behavior; and/or
when the first signal strength is below a sixth threshold, the first signal strength is used to determine that the RRM measurement behavior comprises the first RRM measurement behavior.

25. The method of claim 23 or 24, wherein a measurement time interval corresponding to the third RRM measurement behavior is greater than a measurement time interval corresponding to the first RRM measurement behavior; and/or a number of measurement signals corresponding to the third RRM measurement behavior is less than a number of measurement signals corresponding to the first RRM measurement behavior.

26. The method of any one of claims 18 to 25, wherein the RRM measurement behavior comprises: a fourth RRM measurement behavior and/or a fifth RRM measurement behavior; wherein the fourth RRM measurement behavior comprises performing RRM measurement of a neighboring cell, and the fifth RRM measurement behavior comprises performing RRM relaxation measurement of a neighboring cell.

27. The method of claim 26, wherein
when the first signal strength and/or the second signal strength satisfy a second condition, the first signal strength and/or the second signal strength are used to determine that the RRM measurement behavior comprises the fifth RRM measurement behavior;
when the first signal strength and/or the second signal strength do not satisfy the second condition, the first signal strength and/or the second signal strength are used to determine that the RRM measurement behavior comprises the fourth RRM measurement behavior.

28. The method of claim 27, wherein the first signal strength and/or the second signal strength satisfying the second condition comprises at least one of the following that: the first signal strength is above a seventh threshold; the second signal strength is above an eighth threshold; or a third signal strength is above a ninth threshold, the third signal strength being determined according to the first signal strength and the second signal strength.

29. The method according to any one of claims 26 to 28, wherein a measurement time interval corresponding to the fifth RRM measurement behavior is greater than a measurement time interval corresponding to the fourth RRM measurement behavior; and/or, a number of measured cells corresponding to the fifth RRM measurement behavior is less than a number of measured cells corresponding to the fourth RRM measurement behavior; and/or, a number of measurement signals corresponding to the fifth RRM measurement behavior is less than a number of measurement signals corresponding to the fourth RRM measurement behavior; and/or, a number of measurement frequency points corresponding to the fifth RRM measurement behavior is less than a number of measurement frequency points corresponding to the fourth RRM measurement behavior.

30. The method of claim 22 or 28, wherein
the third signal strength is a minimum value between the first signal strength and the second signal strength; or
the third signal strength is a maximum value between the first signal strength and the second signal strength; or
the third signal strength is an average of the first signal strength and the second signal strength; or
the third signal strength is a weighted average of the first signal strength and the second signal strength; or
the third signal strength is a modified weighted average of the first signal strength and the second signal strength.

31. A measurement apparatus, comprising:
a first receiving module and a second receiving module, the first receiving module having a lower operating energy consumption than the second receiving module; and
a processing module, configured to determine a radio resource management (RRM) measurement behavior according to a first signal strength and/or a second signal strength;
wherein the first signal strength is strength of a first signal, the second signal strength is strength of a second signal, the first signal comprises a measurement signal corresponding to the first receiving module, and the second signal comprises a measurement signal corresponding to the second receiving module.

32. The apparatus of claim 31, wherein the RRM measurement behavior comprises: a first RRM measurement behavior and/or a second RRM measurement behavior, wherein the first RRM measurement behavior comprises using the first receiving module to perform RRM measurement of a serving cell, and the second RRM measurement behavior comprises using the second receiving module to perform RRM measurement of the serving cell and/or a neighboring cell.

33. The apparatus of claim 32, wherein the processing module is configured to: when the first signal strength is below a first threshold, determine that the RRM measurement behavior comprises the second RRM measurement behavior, or determine that the RRM measurement behavior comprises the first RRM measurement behavior and the second RRM measurement behavior.

34. The apparatus of claim 33, wherein the processing module is further configured to:
when the apparatus operates using the first RRM measurement behavior and the first signal strength is below the first threshold, switch to operating based on the second RRM measurement behavior; or
when the apparatus operates using the first RRM measurement behavior and the first signal strength is below the first threshold, switch to operating based on the first RRM measurement behavior and the second RRM measurement behavior.

35. The apparatus of claim 32 or 33 or 34, wherein the processing module is configured to determine that the RRM measurement behavior comprises the first RRM measurement behavior, when the first signal strength and/or the second signal strength satisfy a first condition.

36. The apparatus of claim 35, wherein the processing module is further configured to: when the apparatus operates with the first RRM measurement behavior and the second measurement behavior and the first signal strength and/or the second signal strength satisfy a first condition, switch to operating based on the first RRM measurement behavior.

37. The apparatus of claim 35 or 36, wherein the first signal strength and/or the second signal strength satisfying the first condition comprises at least one of the following that: the first signal strength is above a second threshold; the second signal strength is above a third threshold; a third signal strength is above a fourth threshold, the third signal strength being determined according to the first signal strength and the second signal strength.

38. The apparatus of any one of claims 31 to 37, wherein the RRM measurement behavior comprises: a first RRM measurement behavior and/or a third RRM measurement behavior; wherein the first RRM measurement behavior comprises using the first receiving module to perform RRM measurement of a serving cell, and the third RRM measurement behavior comprises using the first receiving module to perform RRM relaxation measurement of the serving cell.

39. The apparatus of claim 38, wherein the processing module is configured to:
determine that the RRM measurement behavior comprises the third RRM measurement behavior, when the first signal strength is above a fifth threshold; and/or
determine that the RRM measurement behavior comprises the first RRM measurement behavior, when the first signal strength is below a sixth threshold.

40. The apparatus of claim 39, wherein the processing module is further configured to:
when the apparatus operates using the first RRM measurement behavior and the first signal strength is above the fifth threshold, switch to operating based on the third RRM measurement behavior; or
when the apparatus operates using the third RRM measurement behavior and the first signal strength is below the sixth threshold, switch to operating based on the first RRM measurement behavior.

41. The apparatus of claim 38 or 39 or 40, wherein a measurement time interval corresponding to the third RRM measurement behavior is greater than a measurement time interval corresponding to the first RRM measurement behavior; and/or a number of measurement signals corresponding to the third RRM measurement behavior is less than a number of measurement signals corresponding to the first RRM measurement behavior.

42. The apparatus of any one of claims 31 to 41, wherein the RRM measurement behavior comprises: a fourth RRM measurement behavior and/or a fifth RRM measurement behavior; wherein the fourth RRM measurement behavior comprises performing RRM measurement of a neighboring cell, and the fifth RRM measurement behavior comprises performing RRM relaxation measurement of a neighboring cell.

43. The apparatus of claim 42, wherein the processing module is configured to:
determine that the RRM measurement behavior comprises the fifth RRM measurement behavior, when the first signal strength and/or the second signal strength satisfy a second condition; and/or
determine that the RRM measurement behavior comprises the fourth RRM measurement behavior, when the first signal strength and/or the second signal strength do not satisfy the second condition.

44. The apparatus of claim 43, wherein the processing module is further configured to:
when the apparatus operates using the fourth RRM measurement behavior, and the first signal strength and/or the second signal strength satisfy the second condition, switch to operating based on the fifth RRM measurement behavior; or
when the apparatus operates using the fifth RRM measurement behavior, and the first signal strength and/or the second signal strength do not satisfy the second condition, switch to operating based on the fourth RRM measurement behavior.

45. The apparatus of claim 43 or 44, wherein the first signal strength and/or the second signal strength satisfying the second condition comprises at least one of the following that: the first signal strength is above a seventh threshold; the second signal strength is above an eighth threshold; or a third signal strength is above a ninth threshold, the third signal strength being determined according to the first signal strength and the second signal strength.

46. The apparatus of any one of claims 42 to 45, wherein a measurement time interval corresponding to the fifth RRM measurement behavior is greater than a measurement time interval corresponding to the fourth RRM measurement behavior; and/or, a number of measured cells corresponding to the fifth RRM measurement behavior is smaller than a number of measured cells corresponding to the fourth RRM measurement behavior; and/or, a number of measurement signals corresponding to the fifth RRM measurement behavior is less than a number of measurement signals corresponding to the fourth RRM measurement behavior; and/or, a number of measurement frequency points corresponding to the fifth RRM measurement behavior is less than a number of measurement frequency points corresponding to the fourth RRM measurement behavior.

47. The apparatus of claim 37 or 45, wherein
the third signal strength is a minimum value between the first signal strength and the second signal strength; or
the third signal strength is a maximum value between the first signal strength and the second signal strength; or
the third signal strength is an average of the first signal strength and the second signal strength; or
the third signal strength is a weighted average of the first signal strength and the second signal strength; or
the third signal strength is a modified weighted average of the first signal strength and the second signal strength.

48. A measurement apparatus, comprising:
a sending module, configured to send a first signal and/or a second signal;
wherein a first signal strength and/or a second signal strength are used to determine a radio resource management (RRM) measurement behavior, the first signal strength is strength of the first signal, the second signal strength is strength of the second signal, the first signal comprises a measurement signal corresponding to a first receiver, and the second signal comprises a measurement signal corresponding to a second receiver.

49. A terminal device, comprising: a processor; and a receiver connected to the processor; wherein the terminal device is configured to perform the measurement method of any one of claims 1 to 17.

50. A network device, comprising: a processor; a transmitter connected to the processor; and a memory for storing instructions executable by the processor, wherein the network device is configured to perform the measurement method of any one of claims 18 to 30.

51. A computer readable storage medium, having stored therein executable instructions, which is loaded and executed by a processor to implement the measurement method of any one of claims 1 to 17, or to implement the measurement method of any one of claims 18 to 30.

52. A chip, comprising programmable logic circuitry and a program, wherein the chip is configured to implement the measurement method of any one of claims 1 to 17, or to implement the measurement method of any one of claims 18 to 30.

53. A computer program product, comprising computer instructions stored in a computer readable storage medium, wherein a processor of a computer device reads and executes the computer instructions from the computer readable storage medium, such that the computer device performs the measurement method of any one of claims 1 to 17, or performs the measurement method of any one of claims 18 to 30.

54. A computer program, comprising computer instructions, wherein a processor of a computer device executes the computer instructions, such that the computer device performs the measurement method of any one of claims 1 to 17, or performs the measurement method of any one of claims 18 to 30.
